# EUROPEAN PATENT SPECIFICATION

(11) **EP 2 915 984 B1**
(45) Date of publication and mention of the grant of the patent: **01.03.2017**
(21) Application number: 14158257.7
(22) Date of filing: 07.03.2014
(51) Int. Cl.: F02D 19/10, F02D 41/22, F02D 19/06, F02D 35/02, F02D 41/00, F02B 3/06

(54) **Combustion based gas admission valve evaluating during liquid fuel operation of dual fuel engine**
Überwachung eines Gaseinlassventils eines Mehrstoffmotors während des Betriebs mit Flüssigbrennstoff
Supervision d'un injecteur de carburant gazeux d'un moteur à combustibles au cours d'une opération de combustible liquide

(43) Date of publication of application: 09.09.2015
(73) Proprietor: Caterpillar Motoren GmbH & Co. KG, 24159 Kiel (DE)
(72) Inventor: Sixel, Eike Joachim, 24109 Kiel (DE); SIVASUBRAMANIAN, Arvind, Peoria, Illinois 61615 (US)
(74) Representative: Kramer Barske Schmidtchen Patentanwälte PartG mbB

(56) References cited:
- EP-A1- 2 177 741
- WO-A1-99/32775
- DE-A1- 10 215 906
- DE-A1- 10 335 152
- DE-A1-102005 048 456
- DE-A1-102008 041 406

## Description

### Technical Field

The present disclosure generally relates to dual fuel internal combustion engines, and more particularly to switching to operating a dual fuel internal combustion engine with gaseous fuel.

### Background

A dual fuel (DF) internal combustion engine can typically operate in a liquid fuel mode (LFM) and in a gaseous fuel mode (GFM). An exemplary DF internal combustion engine is disclosed, for example, in European Patent Application No. 13 174 377.5 by Caterpillar Motoren GmbH & Co. KG, GERMANY, filed on 28 June 2013. In LFM, a liquid fuel, such as Diesel fuel or heavy fuel oil (HFO), is provided as the sole source of energy during combustion via a main liquid fuel injector. In GFM, a gaseous fuel such as natural gas is provided, for example mixed with air in an intake port of a cylinder. Ignition of the gaseous fuel may be performed with a small amount of liquid fuel that is, for example, injected directly into the cylinder via the same main fuel liquid injector or a separate ignition fuel injector.

In DF internal combustion engines, for each cylinder at least one gaseous fuel admission valve, herein also referred to as gas admission valve (GAV) may be positioned between a source of gaseous fuel and an air intake of the engine. When a GAV is opened in GFM, the gaseous fuel passes into the air intake for mixing with the intake air. An example of a solenoid actuated gaseous fuel admission valve is disclosed in European Patent 1 040 264 B1. Solenoid actuated GAVs include a solenoid coil, a movable plate, and stationary plate or disc, whereby a current delivered to the solenoid coil actuates the valve by lifting the movable plate from the stationary plate.

Due to their positioning close to the combustion chamber, GAVs may be susceptible to contamination and increased wear. For example, during operation in LFM, the movable plate of a solenoid actuated GAV may dither on the stationary plate or disc of the closed gaseous fuel admission valve due to the combustion. Thereby, both movable plate and stationary plate or disc may be exposed to an increased wear. Furthermore, GAV may not only open in GFM but may also open during LFM. For example in case of a solenoid actuated GAV, a pressure difference between intake air and the gaseous fuel pipe system during LFM may result in opening. Then, small particulates may get trapped in the valve, for example, between the movable plate and the stationary plate or the seat of the solenoid actuated GAV and the valve may no longer close properly. Wear as well as contamination of the GAV may result in leakage through even a closed GAV or an increased pass rate through an opened GAV during GFM.

Furthermore, WO 99/32775 A1 discloses a method and apparatus for detecting gaseous fuel leakage through a gaseous fuel admission valve within an engine based on submitting gaseous fuel during liquid fuel mode.

Furthermore, DE 102 15 906 A1 discloses monitoring a supply valve within a fuel system of an internal combustion engine.

The present disclosure is directed, at least in part, to improving or overcoming one or more aspects of prior systems.

### Summary of the Disclosure

In a first aspect, a method of evaluating operability of gaseous fuel admission valves of a dual fuel internal combustion engine comprising a plurality of cylinders and at least one gaseous fuel admission valve for each cylinder of the plurality of cylinders is disclosed. The method comprises operating the dual fuel internal combustion engine on liquid fuel; supplying nitrogen as a purge gas to the gaseous fuel admission valves at a pressure above an intake manifold air pressure thereby setting a differential gas pressure across the gaseous fuel admission valves; measuring, for each cylinder of the plurality of cylinders, a combustion process parameter; and evaluating operability of the gaseous fuel admission valves based on the measured combustion process parameters.

In another aspect, a method of controlling an initialization process for setting the starting conditions for adding gaseous fuel for switching to gaseous fuel operation of a dual fuel internal combustion engine comprises performing the above illustrated method of evaluating operability of gaseous fuel admission valves of a dual fuel internal combustion engine; and aborting the initialization process as soon as the evaluation of the operability of the gaseous fuel admission valves based on the combustion process parameters indicates an error in the operability.

In another aspect, a dual fuel internal combustion engine comprises a liquid fuel system; a gaseous fuel system; a plurality of cylinders; a gaseous fuel admission valve for each cylinder of the plurality of cylinders, fluidly connecting the gaseous fuel system with the cylinder; a sensor for determining a combustion process parameter for each cylinder of the plurality of cylinders; and a control unit configured to perform, for example, one of the above illustrated methods.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary DF internal combustion engine operable inter alia partly on gaseous fuel;
Fig. 2 shows a schematic cross-sectional view of a cylinder of a DF internal combustion engine;
Fig. 3 shows a flow diagram of an exemplary switching process from a liquid fuel operation to a gaseous fuel operation of a DF internal combustion engine using inter alia an exemplary method of evaluating GAV operability; and
Fig. 4 shows an exemplary time-pressure diagram of the cylinder pressure during combustion.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

As indicated above, GAVs of DF internal combustion engines may become contaminated or worn out. Contamination may be caused as the GAVs may not only open in GFM but also during LFM. For example in case of a solenoid actuated GAV, a pressure difference between intake air and the gaseous fuel pipe system during LFM may result in opening. Then, small particulates may get trapped in the valve, for example, between the movable plate and the stationary plate or the seat of the solenoid actuated GAV and the valve may no longer close properly. Similarly, during operation in LFM, particulates can accumulate close to the GAV at the intake air side. Then, if the DF internal combustion engine switches from LFM to GFM, the GAV will open in a first step of the transition (for example still at 100 % of power provided by liquid fuel) and those particulates may be pulled into the valve, resulting potentially again in improperly closing due to, for example, the dirt being stuck between the plates.

The present disclosure may be based in part on the realization that not properly operating GAVs may lead to a sudden and massive overfilling of the respective cylinder with gaseous fuel when enabling GFM. This may result in severe damage to the engine. Thus, it was realized that evaluating the operability of GAVs prior and during switching to GFM may allow avoiding operation with one or more malfunctioning GAVs.

The present disclosure may further be based in part on the realization that evaluating the operability of GAVs before enabling the gaseous fuel supply system may be done using cylinder-specific combustion process parameters such as cylinder pressure measurements. Specifically, a malfunctioning GAV will leak an inert gas, for example nitrogen to a cylinder, thereby affecting the combustion in comparison to those GAVs operating properly. Specifically, a liquid fuel amount that is identical for all the cylinders will be combusted with a modified charge air constellation as additional inert gas is passing through the leaking GAV. This results in a deviating combustion process parameter such as a delayed pressure increase and/or modified mean pressure and/or a modified peak pressure and/or a modified temporal combustion period Δ and/or a modified energy value (e.g. cylinder power, the indicated mean effective pressure (IMEP), and /or the heat release rate) of the respective cylinder.

The combustion process parameter may be determined based on the cylinder pressure, exhaust port temperature, fluctuation of engine speed or measurement of the combustion duration (burn rate) with an ionization detection sensor. The combustion process parameter may further be associated with a single combustion cycle or derived for multiples combustion cycles.

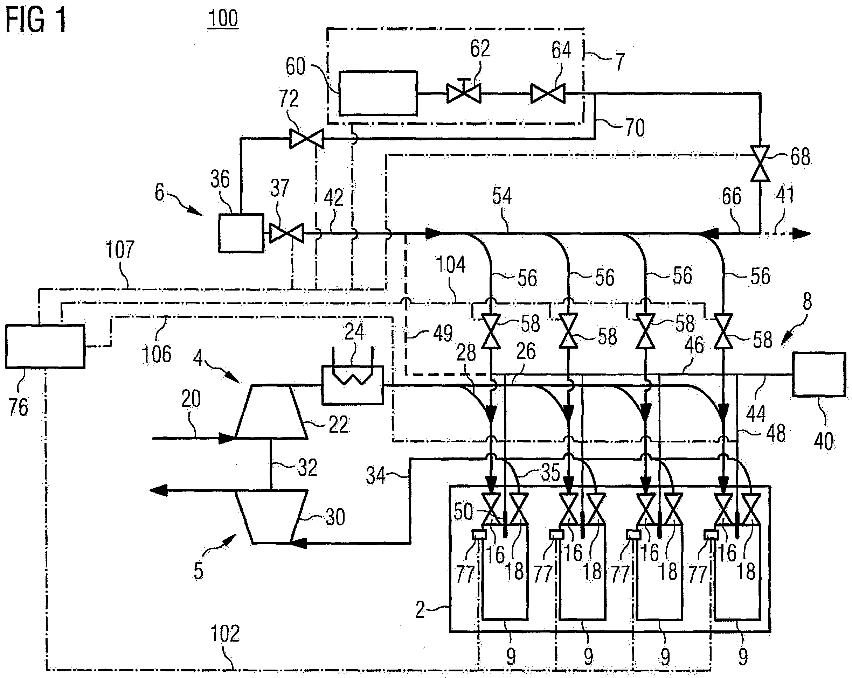

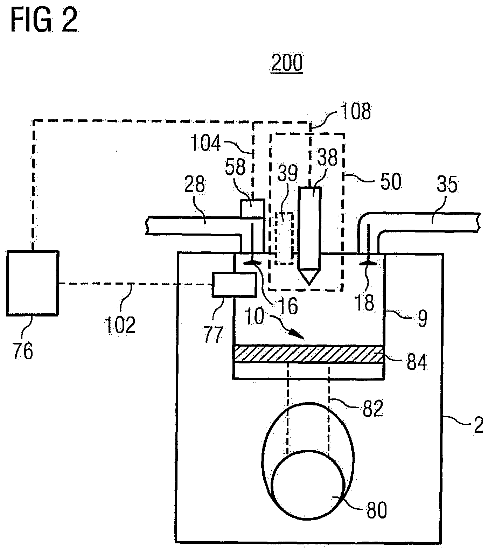

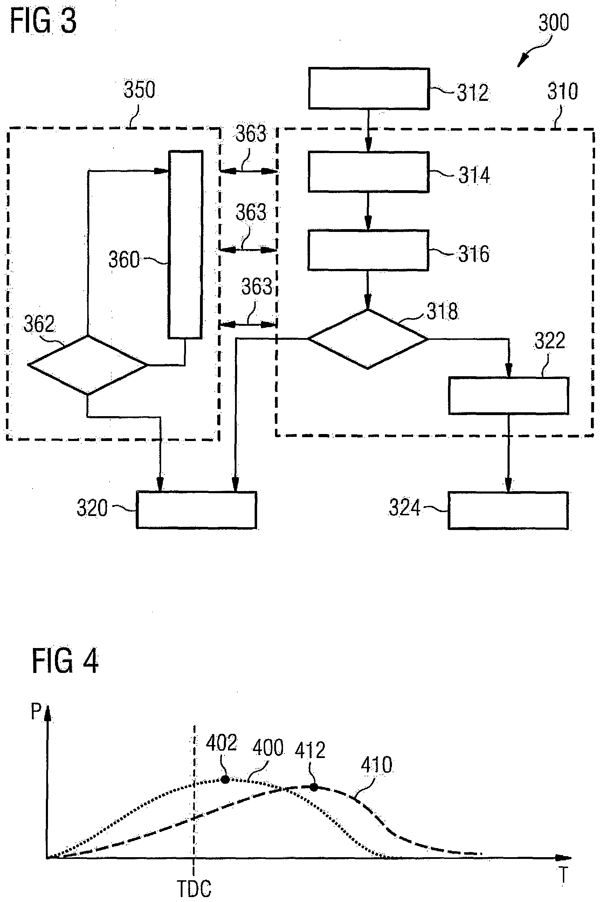

In the following, internal combustion engines operable on liquid fuel and gaseous fuel are described in connection with Figs. 1 and 2. An exemplary method for setting the starting conditions for adding gaseous fuel for initiating gaseous fuel operation of a DF internal combustion engine, which is inter alia based on a method for evaluating operability of gaseous fuel admission valves using a combustion analysis during inert gas flushing, is exemplarily described in connections with Figs. 3 and 4.

Internal combustion engine 100 comprises an engine block 2, a charge air system 4, an exhaust gas system 5, a gaseous fuel system 6 including a purge gas system 7, and a liquid fuel system 8. Internal combustion engine 100 can be powered with a liquid fuel such as, for example, Diesel fuel in LFM, and in GFM with a gaseous fuel such as natural gas, provided for example by an LNG-system.

Engine block 2 comprises a plurality of cylinders. Exemplarily, four cylinders 9 are depicted in Fig. 1. Engine block 2 may be of any size, with any number of cylinders, such as 6, 8, 12, 16, or 20, and in any configuration, for example, "V," in-line, or radial configuration.

Each cylinder 9 is equipped with at least one inlet valve 16 (e.g. two) and at least one outlet valve 18 (also e.g. two). Inlet valves 16 are fluidly connected to charge air system 4 and configured to provide charge air, or a mixture of charge air and gaseous fuel into cylinders 9. Analogous, outlet valves 18 are fluidly connected to exhaust gas system 5 and configured to direct exhaust gas out of respective cylinders 9.

Charge air (also referred to as inlet air) is provided by charge air system 4 including an air intake 20, a compressor 22 to pressurize the air, and a charge air cooler 24. A (charge air) inlet manifold 26 is fluidly connected downstream of charge air cooler 24 and guides charge air via cylinder specific inlet channels 28 into respective cylinders 9. Within inlet manifold 26, the pressure is set by compressor 22 and is also referred to as inlet manifold air pressure (IMAP).

Exhaust gas system 5 includes an exhaust gas turbine 30 connected to compressor 22 via shaft 32 and an (exhaust gas) exit manifold 34 guiding exhaust gas from individual exhaust gas outlet channels 35 to exhaust gas turbine 30.

Charge air system 4 may comprise one or more inlet manifolds 26. Similarly, exhaust gas system 5 may comprise one or more exit manifolds 34.

Exhaust gas turbine 30 and compressor 22 may be part of a single-stage or multi-stage turbocharged system. The turbocharged system allows to modify the common pressure (IMAP) of the charge air provided to inlet manifold 26 within a pre-set range.

In addition, inlet valves 16 and outlet valves 18 may be installed within inlet channels 28 and outlet channels 35, respectively. Inlet channels 28 as well as outlet channels 35 may be provided within a common cylinder head or individual cylinder heads covering respective cylinders 9.

Operating inlet valves 16 and outlet valves 18 may be subject to cylinder-specific timings, i.e. opening time and closing time and, thus, opening duration during the oscillation of the piston. In dependence of those parameters, the amount of air provided into each cylinder for combustion can be adjusted.

Gaseous fuel system 6 comprises a gaseous fuel source 36 connected to gaseous fuel piping 42. Gaseous fuel source 36 constitutes a gaseous fuel feed for supplying gaseous fuel for combustion in GFM. For example, gaseous fuel source 36 comprises a gas valve unit and a gaseous fuel tank that contains natural gas in a pressurized state.

The gas valve unit of gaseous fuel system 6 may be configured to allow, to block, and to control flow from the gaseous fuel tank into gaseous fuel piping 42. The gas valve unit may comprise gaseous fuel control valves, gaseous fuel shut-off valves and venting valves.

As shown in Fig. 1, gaseous fuel piping 42 is fluidly connected to a gaseous fuel manifold 54 which comprises a plurality of gaseous fuel channels 56. Each gaseous fuel channel 56 is fluidly connected to one of the plurality of inlet channels 28. To dose gaseous fuel into individual inlet channels 28, for example, in each gaseous fuel channel 56, a gaseous fuel admission valve (GAV) 58 is installed. In some embodiments, internal combustion engine 100 may comprise more than one gaseous fuel manifold 54.

Accordingly, in the embodiment of Fig. 1, gaseous fuel system 6 includes the following volumes that are filled with gaseous fuel during GFM: the gas valve unit and the gaseous fuel tank of gaseous fuel source 36; separable therefrom via a valve 37, gaseous fuel piping 42, and gaseous fuel manifold 54 with gaseous fuel channels 56. Each gaseous fuel channel 56 is fluidly connectable to the respective inlet channels 28 of inlet manifold 26 by respective GAV 58.

Each GAV 58 is configured to allow or to block flow of gaseous fuel into an individual inlet channel 28 to mix with compressed charge air from charge air system 4 in GFM. For example, cylinder specific mixing zones downstream of GAV 58 are provided. For example, GAV 58 may be solenoid actuated plate valves in which springs hold a lower surface of a movable disk against an upper surface of a stationary disk or plate, the two surfaces being configured to provide a sealed relationship in a closed state of GAV 58. Each GAV 58 may be mounted to a cylinder head covering at least one cylinder 9.

In general, the amount of gaseous and/or fuel provided to a respective cylinder determines the cylinder-specific power output. During LFM, the amount of provided liquid fuel may depend on the load, thus, the set output power. During GFM, the amount of provided gaseous fuel may depend on the pressure situation upstream and downstream of GAV 58 (differential gas pressure across GAV 58) as well as the opening times of the same.

In the embodiment shown in Fig. 1, purge gas system 7 comprises a purge gas tank 60, a purge gas control valve 62, and a purge gas shut-off valve 64 connected in series. Purge gas tank 60 constitutes a purge gas source to flush gaseous fuel system 6 including gaseous fuel piping 42, gaseous fuel manifold 54, etc. with a purge gas such as nitrogen in a pressurized state. During LFM, for safety reasons, piping close to the engine is freed from gaseous fuel and, thereby, air and water may enter the piping during LFM. Prior filling the freed sections of gaseous fuel system 6 with gaseous fuel, flushing the same with, for example, nitrogen is done for safety considerations to, e.g., remove any air (and thus oxygen) and moisture (water condensate) there from. For the flushing, relief valves, which may be provided at various positions of the gaseous fuel system, may be opened and the content may be flushed to secure location(s) via relief paths such as a relief path 41 exemplarily shown in Fig. 1. In some operational procedures, also GAV 58 may be used as a flushing exit, thereby releasing the purge gas and/or a mixture of purge gas with gaseous fuel into the charge air.

Purge gas system 7 may be fluidly connected to gaseous fuel system 6 at various locations. For example, in Fig. 1 a first connection 66 is disposed proximal to gaseous fuel manifold 54. A second connection 70 is disposed at or proximal to gaseous fuel source 36. First shut-off valve 68 and second shut-off valve 72 can block or allow a purge gas flow through first connection 66 and second connection 70, respectively. Additional connections may be integrated to selectively flush various section of the gaseous fuel system 6 such as the gas valve unit of gaseous fuel source 36.

Referring again to Fig. 1, liquid fuel system 8 comprises a liquid fuel tank 40 connected to a liquid fuel piping 44. Liquid fuel tank 40 may comprise a first liquid fuel tank for storing a first liquid fuel, for example, heavy fuel oil (HFO), and a second liquid fuel tank for storing a second liquid fuel, for example Diesel fuel. Liquid fuel tank 40 constitutes a liquid fuel source for supplying liquid fuel for combustion in LFM. Additionally, liquid fuel tank 40 may constitute a liquid fuel source for supplying ignition fuel in GFM. In some embodiments, the liquid fuel for ignition may contribute up to, for example, 5% or 10 % or more of the fuel amount being combusted in GFM.

Liquid fuel piping 44 is fluidly connected to a liquid fuel manifold 46 having a plurality of liquid fuel inlet channels 48. To dose liquid fuel into the combustion chamber of cylinder 9, in each liquid fuel inlet channel 48 a fuel injection system 50 is installed.

In some embodiments of a DF internal combustion engine, GFM may be based on a spark ignited gaseous fuel combustion and fuel injection system 50 may be fluidly connected to gaseous fuel source 36 (indicated by a dashed line 49 in Fig. 1). In that embodiment, fuel injection system 50 may comprise a pre-combustion chamber for providing spark ignited pilot flames (not shown) to ignite the mixture of gaseous fuel and air. In some embodiments of spark ignition, the pre-chamber ignition may contribute, for example, in the range from 2 % to 8 % such as 5 % of the fuel amount being combusted.

As further shown in Fig. 1, internal combustion engine 100 comprises a plurality of pressure sensors 77, (at least) one for each cylinder 9. Each pressure sensor 77 is configured to generate a signal corresponding to a temporal development of an internal cylinder pressure during operation of the engine, for example during the scavenging phase and/or combustion. The pressure sensor is further described when referring to Fig. 2.

To control operation of engine 100, a control unit 76 is provided. Control unit 76 forms part of a control system of the engine. Control unit 76 is configured to receive data of pressure sensor 77 via a readout connection line 102. Control unit 76 may further be configured to control various components of engine 100 such as GAV 58 via a control connection line 104 and fuel injection system 50 via a control connection line 106. Control unit 76 may further be configured to control inlet valves 16, outlet valves 18, and via control connection lines 107 purge gas system 7 and the valves of purge gas system 7. In some embodiments, a second control unit may be provided to control the engine operation as mentioned above. Further description of the control system and additional control lines between control unit 76 and other components of the engine, such as the fuel injection system 50, will be given in connection with Fig. 2. In general, the control system may comprise electronic control elements of the control unit 76 as well as mechanical control elements.

In addition or alternatively, control unit 76 may be connected to other sensors not shown in Fig. 1 such as engine load sensors, engine speed sensors, temperature sensor and NOx sensors provided for a common exhaust of the plurality of cylinders. Control unit 76 may also be connected to an operator panel (not shown) for issuing a warning to the operator, indicating a failure of the engine, the switching between modes, or the like.

Exemplary embodiments of fuel injection system 50 for DF internal combustion engines are described in more detail in reference to Fig. 2. Specifically, Fig. 2 shows a cylinder 9 of a DF internal combustion engine 200 which is an exemplary embodiment of internal combustion engine 100 of Fig. 1. Elements already described in connection with Fig. 1 have the same reference numerals, such as engine block 2, control unit 76, pressure sensor 77, and cylinder 9.

Cylinder 9 provides at least one combustion chamber 10 for combusting a mixture of gaseous fuel and air, a piston 84, and a crankshaft 80 which is drivingly connected to piston 84 via a piston rod 82. Piston 84 is configured to reciprocate within cylinder 9.

Cylinder 9 is connected to inlet manifold 26 via inlet channel 28 and to exit manifold 34 via outlet channel 35 (see also Fig. 1). Inlet valve 16 is disposed in inlet channel 28, and outlet valve 18 is disposed in outlet channel 35. GAV 58 controls the passing of gaseous fuel to combustion chamber 10 of cylinder 9.

Fig. 2 further illustrates fuel injection system 50 schematically by a dashed box. When DF internal combustion engine 200 is operated in LFM, fuel injection system 50 is used to inject liquid fuel into combustion chamber 10, the liquid fuel being the sole source of energy. When DF internal combustion engine 200 is operated in GFM, fuel injection system 50 may be used to inject an ignition amount of liquid (ignition) fuel into combustion chamber 10 to ignite the mixture of gaseous fuel and air. In GFM, fuel injection system 50 may therefore function as a gaseous fuel ignition system. During transitions from LFM to GFM and vice versa, the contribution of liquid fuel to the combustion process is increasingly replaced by a contribution of gaseous fuel to the combustion process and vice versa. Specific control procedures for the transition may be based, for example, on maintaining a respective power output of the engine constant or at least within a pre-set range and perform the transition based, for example, on a predefined transition rate by increasing the opening duration of the solenoid actuated GAVs and reducing the amount of liquid fuel respectively.

In Fig. 2, an exemplary embodiment of such a gaseous fuel ignition system is based on a main liquid fuel injector 38 for injecting into combustion chamber 10 a large amount of liquid fuel in LFM as well as, in GFM, an ignition amount of liquid fuel to ignite the mixture of gaseous fuel and air. In other embodiments, such as for heavy duty DF internal combustion engines, gaseous fuel ignition system may comprise a separate ignition liquid fuel injector 39 to inject the ignition amount of liquid fuel into combustion chamber 10 in GFM.

Cylinder 9 further comprises pressure sensor 77 to measure a temporal development of an internal cylinder pressure during the operation of the engine. Pressure sensor 77 may be a capacitive pressure sensor, an electromagnetic pressure sensor, a piezoelectric pressure sensor, an optical pressure sensor or any other pressure sensor known in the art. Pressure sensor 77 may be mounted at any location of cylinder 9 convenient for measuring the cylinder pressure during operation of the engine. For example, pressure sensor 77 may be mounted within a cylinder side wall or at the cylinder head face. Pressure sensor 77 may reach at least partly into the combustion chamber of cylinder 9, for example through a bore in a cylinder side wall. Information on the internal cylinder pressure may additionally or alternatively be provided by pressure analysis of inlet and/or exhaust pressure for each cylinder.

Pressure sensor 77 may further be disposed outside of the combustion chamber 10 to detect the cylinder pressure indirectly. For example, pressure sensor 77 may be mounted at an existing component of the engine, such as a bolt head, spark plug boss, etc. Pressure sensor 77 may sense stress of that component during combustion, the stress corresponding to the internal cylinder pressure during combustion.

DF internal combustion engine 200 additionally comprises a control system including control unit 76. Control unit 76 is connected to main liquid fuel injector 38 via control connection line 108 and, in case of heavy duty DF internal combustion engines, also to ignition liquid fuel injector 39 via a separate control connection line (not shown).

In general, control unit 76 of an engine as disclosed in connection with Figs. 1 and 2 may be a single microprocessor or multi microprocessors that include means for controlling, among others, an operation of various components of the internal combustion engine. Control unit 76 may be a general engine control unit (ECU) capable of controlling numerous functions associated with the internal combustion engine and/or its associated components. Control unit 76 may include all components required to run an application such as, for example, a memory, a secondary storage device, and a processor such as a central processing unit or any other means known in the art for controlling the internal combustion engine and its components. Various other known circuits may be associated with control unit 76, including power supply circuitry, signal conditioning circuitry, communication circuitry and other appropriate circuitry. Control unit 76 may analyze and compare received and stored data and, based on instructions and data stored in memory or input by a user, determine whether action is required. For example, control unit 76 may compare received pressure data from pressure sensor 77 with target values stored in memory, and, based on the results of the comparison, transmit signals to one or more components of the engine to alter the operation of the same.

When the internal combustion engine is operated, the pressure situation may vary from cylinder to cylinder with respect to charge air, exhaust, gaseous fuel. Then, also the air provided to the combustion chamber as well as the fuel amount may vary and similarly, the power of the cylinders as well as the respective exhaust pressure.

When switching to GFM, it may be desirable to measure and evaluate one or more combustion process parameters cylinder-specifically and access therefrom the operability of GAVs to avoid switching into GFM with a malfunctioning GAV.

### Industrial Applicability

Exemplary internal combustion engines suited to the disclosed methods are, for example, DF internal combustion engines of the series M46DF and M34DF manufactured by Caterpillar Motoren GmbH & Co. KG, Kiel, Germany. One skilled in the art would appreciate, however, that the disclosed method can be adapted to suit other internal combustion engines as well.

In the following, operation and control of DF internal combustion engines as exemplarily described with reference to Figs. 1 and 2 are disclosed in connection with Figs. 3 and 4. For illustration purposes, the methods are disclosed with reference to structural elements disclosed in connection with Figs. 1 and 2. However, the skilled person will understand that the respective steps can be performed on other embodiments as well.

Referring to Fig. 3, a flow chart of a process 300 setting the starting conditions for adding gaseous fuel for initiating gaseous fuel operation of a DF internal combustion engine, which is inter alia based on a method for evaluating operability of gaseous fuel admission valves using a combustion analysis during inert gas flushing, is illustrated. Process 300 takes place prior liquid fuel is supplied to (initially added to) gaseous fuel manifold 54 with gaseous fuel channels 56. Process 300 includes a first GAV testing phase 310 and a second GAV testing phase 350. Although disclosed in combination and in a specific sequence, those two testing phases are principally independent from each other and, thus, may be performed independently from each other.

Process 300 starts at operating DF internal combustion engine 100 in LFM (step 312). Then, a control signal to switch to gaseous fuel operation is initiated, for example, by an operator.

As a first step of first GAV testing phase 310, those sections of gaseous fuel system 6 not under pressure by gaseous fuel are flushed with purge gas (step 314). For example, purge gas system 7 is operated to provide pressurized nitrogen via shut-off valve 68 to gaseous fuel manifold at a pressure above the charge air pressure (IMAP), specifically at least 0.2 bar such as above 0.5 bar, for example, in a range from 1 bar to 2 bar or even up to 5 bar or more over IMAP. The flushing is maintained by purging the nitrogen, for example, via relief path 41 until it can be assumed that only the purge gas is within gaseous fuel manifold 54 and gaseous fuel channels 56. At the end of the flushing, all valves may be closed to contain the flushed section under the pressurized inert gas.

During the flushing and/or the maintaining under pressurized inert gas, the pressure within the flushed section, e.g. gaseous fuel manifold 54, is monitored (step 316). Then, the detected pressure behavior is compared with an expected pressure behavior that can be assumed for the flushing and/or the maintaining of the pressure (e.g. constant pressure).

During monitoring step 316, an assessment of the pressure is continuously performed (step 318). If a deviation of the measured pressure behavior from the expected pressure behavior is identified, switching process 300 is aborted (step 320). For example, a required purging gas pressure may not be reached due to a leakage in the gas system and/or a GAV. For a leaking (defect) GAV, the leaking purge gas may not affect the combustion process in the respective cylinder such - that at this stage - a damage to the engine is still avoided. Assuming that first GAV testing phase 310 was performed successfully, purge gas valves are closed (step 322), in particular shut-off valve 68 to prepare the system for gaseous fuel operation. For example, gaseous fuel may be supplied to gaseous fuel manifold 54 (step 324).

As previously indicated first GAV testing phase 310 may accompanied from second GAV testing phase 350 or second GAV testing phase may be performed independently as long as a similar condition for second GAV testing phase 350 are provided (for example an essentially stationary pressure is build up upstream of GAVs 58).

Second GAV testing phase 350 is based on operating (step 312) the dual fuel internal combustion engine 100 on liquid fuel and having a purge gas such as nitrogen at a pressure above an intake manifold air pressure provided upstream of GAV 58. This may be reached by supplying (step 354) the purge gas to GAVs 58 and thereby setting a differential gas pressure across GAVs 58.

Second GAV testing phase 350 comprises then an evaluation of the combustion process, for example, by measuring (step 360), for each cylinder of the plurality of cylinders a combustion process parameter and evaluating (step 362) operability of GAVs 58 based on the measured combustion process parameters.

Evaluation step 362 may comprise comparing individual combustion process parameters with each other or values derived from the measured combustion process parameters or a sub-group of measured data or even with pre-set values. For example, one may determine the measured combustion process parameter for at least one cylinder 9 of the plurality of cylinders 9 to be beyond a threshold value, and therefrom identify the corresponding GAV 58 to be malfunctioning. The threshold value may be based on a mean value of the measured combustion process parameters of all or a sub-group of cylinders. The sub-group may include all cylinder values but the cylinder value which is to be evaluated. For example, the threshold value may define a range around the mean value that indicates correct operability of the respective GAV 58 within that range and malfunction of that GAV 58 outside of that range.

The threshold value may further be pre-set or depend on at least one of an opening time of GAVs 58, the load of the DF internal combustion engine 100, and temperature conditions.

In some embodiments, the combustion process parameter is determined based on the cylinder pressure. For example, the combustion process parameter is a pressure value such as a mean pressure or a peak pressure (indicated exemplarily in Fig. 4 by reference numerals 402 and 412) and/or a temporal combustion period (indicated exemplarily in Fig. 4 by reference sign Δ) and/or an energy value such as the cylinder power, the indicated mean effective pressure, and the heat release rate of the respective cylinder.

In general, the combustion process parameter may be associated to a single combustion cycle or it may be derived from data of multiple combustion cycles.

In some embodiments, the differential gas pressure across GAVs 58 is set such that a properly operating gaseous fuel admission valve 58 is properly sealing. The differential gas pressure across GAVs 58 may be at least 1 bar; for example, the differential gas pressure may be at least 0.2 bar, at least 0.5 bar, for example, in the range from 1 bar to 2 bar above the IMAP.

At this stage, it can be continued with adding gaseous fuel to gaseous fuel manifold 54 such that a transition from a liquid fuel based combustion to a gaseous fuel based combustion is initiated.

Referring again to the evaluation of the operability of GAVs, the evaluation can be performed from the beginning, i.e. already during the flushing step 314 as well as when the inert gas pressure is maintained and monitored (step 316).

The evaluation is based on measuring at least one combustion process parameter for each cylinder for which the evaluation of the GAV is to be performed (step 360). The continuous monitoring of the combustion process parameter during the various steps is indicated by arrows 363. In the context of the evaluation, continuously monitoring includes monitoring the combustion process parameter for all times throughout a combustion cycle, for a temporal section of the combustion cycle, or for a specific sequence of combustion cycles that may exclude combustion cycles as long as the gained parameters allow reacting to a malfunctioning GAV in line with the required response speed.

In general the complete engine will be switched to GFM and, accordingly, all GAVs 58 will be monitored and all respective combustion process parameters will be measured.

Based on the measured combustion process parameters, an evaluation of the operability of GAVs 58 is performed (step 362). If the evaluation results in an indication that at least one of GAVs 58 is malfunctioning, process 300 is aborted (step 320). As long as the switching process 300 is not aborted or even once it is aborted, the steps of measuring the combustion process parameters maybe continued (loop 364).

With respect to switching process 300, the following specific embodiments may be applied. The combustion process parameter may be a pressure value such as a mean pressure or a pressure peak as well as an energy value derived from detected pressure values such as the cylinder power, the indicated mean effective pressure (IMEP) and the heat release weight, each being derivable from pressure values, for example, detected by pressure sensor 77.

In general, the evaluation based on the combustion process parameter may be based on a threshold evaluation or a comparison of the respective values from the remaining GAVs or an average value of the all (or the remaining) measured combustion process parameters. In case of a threshold analysis, the threshold may, for example, depend on the opening time of GAVs 58, the load of the DF engine, the charge air temperature etc.

The pressure may be modified, for example, stepwise such that during stationary time intervals, the evaluation of the measured combustion process parameters is performed.

With respect to first GAV testing phase 310, the evaluation of the inert gas pressure may be based on searching for increased pressure drop behavior to indicate malfunction of at least one of the gaseous fuel admission valves. In contrast to second GAV testing phase 350, first GAV testing phase 310 may not be cylinder specifically. Thus, the same may be combined with aspects such as separately or stepwise activating gaseous fuel admission valves, thereby adding inert gas to the inlet air and potentially cleaning sealing surfaces of the gaseous fuel admission valves. This, however, may even cause contamination of GAVs. Moreover, pressure behavior monitoring (steps 314-318) be repeated to increase accuracy.

In the following, exemplarily the measuring of the cylinder pressure as an exemplary combustion process parameter is discussed in connection with Fig. 4.

In Fig. 4, exemplary developments of the cylinder pressure during the combustion are shown for a correctly operating GAV (graph 400) and a malfunctioning GAV (graph 410).

Assuming that tested GAVs operate correctly, the respective amounts of liquid fuel in each cylinder are essentially identical. Accordingly, any correctly operating GAV will result in pressure behaviors similar to graph 400. Graph 400 comprises an increase of pressure up to a certain maximum compression pressure (peak pressure 402), followed by a decay of pressure back to the initial pressure. Usually peak pressure 402 occurs at times later than TDC due to the finite combustion time. For medium speed internal combustion engines, example values for peak pressure 402 are in the range from, for example, 100 bar and 180 bar, respectively.

Assuming now that the malfunctioning results in a less tight closing of the GAV, an amount of inert gas will be provided to the respective cylinder. Accordingly, in comparison to a correctly operating GAV, the ratio of oxygen to non-oxygen in the charge air passing through inlet valve 16 is reduced. This will affect the combustion process and a modified pressure behavior indicated by graph 410 will be measured. In Fig. 4, for illustration the difference is emphasized. For example, peak pressure 412 of graph 410 is delayed due to a slower combustion. Peak pressure may further increase (or decrease) and the temporal combustion period may lengthen (shorten) due to more efficient or less efficient combustion conditions, depending on, for example, the lambda value and other engine parameters such as temperature and compression during the combustion cylce. The changes such as the shift and temporal duration (exemplarily indicated in Fig. 4) are then detected and analyzed. It is noted that in particular for low speed to medium speed engines, already small changes in the pressure behavior can be observed with sufficient accuracy.

In some embodiments where combustion process parameters are derived for a series of combustion events, the combustion process parameters may be derived, for example, for successive combustion events or for every other, third, fourth or any other fraction of combustion events. The combustion process parameters may be derived also only for specific crank angle regions.

The herein disclosed switching procedure can be controlled, for example, using control unit 76. For example, control unit 76 receives the pressure data of the respective cylinders 9 and analyzes the same. The pressure data may be available for discrete times during the combustion cycle, e.g. for 0.1° crank angle, or quasi-continuously depending on the temporal resolution of pressure sensor 77. The combustion process parameter may be derived as a heat release rate of the combustion, for example, by multiplying the received pressure data (graphs 400, 410) with the corresponding cylinder volume using well known equations. As mentioned above, a further example of the combustion process parameter is the indicated mean effective pressure (IMEP) of the cylinder 9, wherein the IMEP is derived by integrating the received pressure data over the period of a combustion cycle. Furthermore, the combustion process parameter may be derived, for example, from a pressure difference between pressure data associated with combustion and pressure data associated with motored operation of the engine.

In some embodiments, threshold level(s) may be stored on the memory of control unit 76 as a fixed value or may be determined based on empirical values typical for the engine. The predetermined combustion threshold level may further depend on further parameters such as the load of the internal combustion engine. In this case, control unit 76 may additionally be connected to, e.g. engine load, sensors configured to receive those parameters.

In some embodiments, a differential gas pressure across gaseous fuel admission valves may not be required for porperly sealing the gaseous fuel admission valves. In those embodiments as well as when the engine is not operating in LFM, suitable pressure ranges for flushing may be above ambient pressure, for example at least 0.2 bar, at least 0.5 bar, or at least 1 bar, for example in the range from 1 bar to 2 bar or even up to 5 bar or more, above the ambient pressure.

As also mentioned above, an efficient and flexible analysis can be based on a comparison between the data received for the various cylinders because those data are in principle independent of further external influences as long those influences affect all cylinders essentially similarly. Thus, specifically comparing one combustion process parameter with an averaged parameter value determined for all (or the remaining) cylinders is proposed.

The herein disclosed aspects are, for example, relevant with respect to the safe operation of marine DF internal combustion engines. For those engines, Marine Class Society may demand specific safety routines when switching between LFM and GFM. First and second GAV testing phases may ensure or at least help that engines such as DF internal combustion engines of the series M46DF and M34DF comply with those regulation by initiating appropriate control steps such as not allowing or terminating the switching process once a malfunctioning GAVs is detected.

As disclosed herein, in general, the operability of GAVs is checked before fully enabling the gas supply and switching to GFM. The herein disclosed concepts relate to the transition from LFM to GFM. While setting the gaseous fuel system and prior the initiation of the fuel transition to GFM, the power of the cylinders (e.g. based on the IMEP) is observed. If one cylinder shows a considerably increasing or decreasing power and/or a delayed or advanced peak pressure point in time, and/or change in temporal combustion period compared to the average of the cylinders, the transition is stopped immediately. If not, the normal transition proceeds, gaseous fuel is suppied, and the GAV opening times and/or the gaseous fuel pressure are increase to the desired value(s).

The herein disclosed methods for evaluating the operability of GAVs may be performed every time before switching from LFM to GFM.

Although the preferred embodiments of this invention have been described herein, improvements and modifications may be incorporated without departing from the scope of the following claims.

## Claims

1. A method of evaluating operability of gaseous fuel admission valves (58) of a dual fuel internal combustion engine (100) comprising a plurality of cylinders (9) and at least one gaseous fuel admission valve for each cylinder (9) of the plurality of cylinders (9), the method comprising:
operating (step 312) the dual fuel internal combustion engine (100) on liquid fuel;
supplying (step 354) nitrogen as a purge gas to the gaseous fuel admission valves (58) at a pressure above an intake manifold air pressure thereby setting a differential gas pressure across the gaseous fuel admission valves (58);
measuring (step 360), for each cylinder of the plurality of cylinders, a combustion process parameter; and
evaluating (step 362) operability of the gaseous fuel admission valves (58) based on the measured combustion process parameters.

2. The method of claim 1, wherein evaluating (step 362) the operability of the gaseous fuel admission valves (58) comprises:
determining the measured combustion process parameter for at least one cylinder (9) of the plurality of cylinders (9) to be beyond a threshold value; and
identifying the corresponding gaseous fuel admission valve (58) to be malfunctioning.

3. The method of claim 2, wherein the threshold value is based on a mean value of the measured combustion process parameters of all or at least a sub-group of cylinders such as all cylinder values except the at least one cylinder and/or the threshold value that is pre-set or depends on at least one of an opening time of the gaseous fuel admission valves (58), the load of the DF internal combustion engine (100), and temperature conditions.

4. The method of any one of the preceding claims, wherein the combustion process parameter is determined based on the cylinder pressure.

5. The method of any one of the preceding claims, wherein the combustion process parameter is a pressure value such as a mean pressure or a peak pressure and/or a temporal combustion period (Δ) and/or an energy value such as the cylinder power, the indicated mean effective pressure, and the heat release rate of the respective cylinder.

6. The method of any one of the preceding claims, wherein the combustion process parameter is associated to a single combustion cycle or derived from multiples combustion cycles.

7. The method of any one of the preceding claims, wherein the differential gas pressure across the gaseous fuel admission valve (58) is set such that a properly operating gaseous fuel admission valve (58) is properly sealing.

8. The method of any one of the preceding claims, wherein the differential gas pressure across the gaseous fuel admission valve (58) is at least 0.2 bar, at least 0.5 bar, or at least 1 bar, for example in the range from 1 bar to 2 bar or even up to 5 bar or more, above the inlet manifold air pressure.

9. A method of controlling an initialization process (300) for setting the starting conditions for adding gaseous fuel for switching to gaseous fuel operation of a dual fuel internal combustion engine (100) comprising a plurality of cylinders (9) and at least one gaseous fuel admission valve for each cylinder (9) of the plurality of cylinders (9), the method comprising:
performing the method of evaluating operability of gaseous fuel admission valves (58) of a dual fuel internal combustion engine (100) according to any one of the preceding claims; and
aborting (step 320) the initialization process (300) as soon as the evaluation of the operability of the gaseous fuel admission valves (58) based on the combustion process parameters indicates an error in the operability.

10. The method of claim 9, further comprising:
flushing (step 314) - at least partly - a gaseous fuel system (6) with the purge gas at a pressure larger than the inlet manifold air pressure, for example at least 0.2 bar, at least 0.5 bar, or at least 1 bar, for example in the range from 1 bar to 2 bar or even up to 5 bar or more, above the inlet manifold air pressure;
closing (step 316) the gaseous fuel system (6) or a section of the same; and
evaluating (step 318) the temporal development of the purge gas pressure.

11. The method of claim 9 or claim 10, further comprising:
when the evaluation of the purge gas pressure indicates malfunction of at least one of the gaseous fuel admission valves (58) in view of an increased pressure drop behavior, activating, for example separately or stepwise the gaseous fuel admission valves (58), thereby adding purge gas to the inlet air and potentially cleaning sealing surfaces of the gaseous fuel admission valves (58); and
repeating the steps of closing (step 316) and evaluating (step 318) the temporal development of the purge gas pressure.

12. A dual fuel internal combustion engine (100), comprising:
a liquid fuel system (8);
a gaseous fuel system (6);
a plurality of cylinders (9);
a gaseous fuel admission valve (58) for each cylinder (9) of the plurality of cylinders (9), fluidly connecting the gaseous fuel system (6) with the cylinder (9);
a sensor (77) for determining a combustion process parameter for each cylinder (9) of the plurality of cylinders (9); and
a control unit (76) configured to perform the method according to any one of the preceding claims.

13. The internal combustion engine (100) of claim 12, further comprising:
a purge gas system (7) for flushing and filling the gaseous fuel system (6) with nitrogen at least partly, e.g. at least upstream of the gaseous fuel admission valves.

## Patentansprüche

1. Verfahren zum Auswerten der Betriebsfähigkeit von gasförmigen-Kraftstoff-Einlassventilen (58) eines Zweikraftstoff-Verbrennungsmotors (100) mit einer Mehrzahl von Zylindern (9) und mindestens einem gasförmigen-Kraftstoff-Einlassventil für jeden Zylinder (9) der Mehrzahl von Zylindern (9) mit den Schritten:
Betreiben (Schritt 312) des Zweikraftstoff-Verbrennungsmotors (100) mit Flüssigkraftstoff,
Versorgen (Schritt 354) der gasförmigen-Kraftstoff-Einlassventile (58) mit Stickstoff als Spülgas bei einem Druck oberhalb eines Einlassleitungsluftdrucks, wodurch ein differentieller Gasdruck an den gasförmigen-Kraftstoff-Einlassventilen (58) eingestellt wird,
Messen (Schritt 360) für jeden Zylinder der Mehrzahl von Zylindern einen Verbrennungsprozessparameter und
Auswerten (Schritt 362) der Betriebsfähigkeit der gasförmigen-Kraftstoff-Einlassventile (58) basierend auf den gemessenen Verbrennungsprozessparametern.

2. Verfahren nach Anspruch 1, wobei das Auswerten (Schritt 362) der Betriebsfähigkeit der gasförmigen-Kraftstoff Einlassventile (58) umfasst:
Bestimmen, dass der gemessene Verbrennungsprozessparameter für mindestens einen Zylinder (9) der Mehrzahl von Zylindern (9) jenseits eines Schwellenwerts ist, und
Identifizieren des zugehörigen gasförmigen-Kraftstoff-Einlassventils (58) als fehlerhaft.

3. Verfahren nach Anspruch 2, wobei der Schwellenwert auf einem Mittelwert der gemessenen Verbrennungsprozessparameter für alle oder zumindest eine Untergruppe von Zylindern basiert wie alle Zylinderwerte mit Ausnahme des mindestens einen Zylinders und/oder der Schwellenwert ist voreingestellt oder hängt von einer Öffnungszeit des gasförmigen-Kraftstoff Einlassventils (58), der Last des DF-Verbrennungsmotors (100) und/oder Temperaturbedingungen ab.

4. Verfahren nach einem der vorhergehenden Ansprüche, wobei der Verbrennungsprozessparameter basierend auf dem Zylinderdruck bestimmt wird.

5. Verfahren nach einem der vorhergehenden Ansprüche, wobei der Verbrennungsprozessparameter ein Prozesswert wie ein mittlerer Druck oder eine Spitzendruck und/oder eine zeitliche Verbrennungsdauer (Δ) und/oder ein Energiewert wie die Zylinderleistung, der angezeigte mittlere effektive Druck und die Wärmeabgaberate des entsprechenden Zylinders ist.

6. Verfahren nach einem der vorhergehenden Ansprüche, wobei der Verbrennungsprozessparameter zu einem einzelnen Verbrennungszyklus gehört oder von Daten von mehreren Verbrennungszyklen gewonnen wird.

7. Verfahren nach einem der vorhergehenden Ansprüche, wobei der differentielle Gasdruck über das gasförmige-Kraftstoff Einlassventil (58) derart eingestellt ist, dass ein korrekt arbeitendes gasförmige-Kraftstoff Einlassventil (58) korrekt abdichtet.

8. Verfahren nach einem der vorhergehenden Ansprüche, wobei der differentielle Gasdruck über das gasförmige-Kraftstoff-Einlassventil (58) mindestens 0,02 bar, mindestens 0,05 bar, mindestens 1 bar ist, zum Beispiel ist der differentielle Gasdruck im Bereich von 1 bar bis 2 bar oder sogar bis zu 5 bar oder mehr über dem Einlassleitungsluftdrucks.

9. Verfahren zum Steuern eines Initialisierungsprozesses (300) zum Einstellen die Startbedingungen zum Hinzufügen von gasförmigen Kraftstoff zum Wechseln zu einem gasförmigen-Kraftstoffbetrieb eines Zweikraftstoff Verbrennungsmotors (100) mit einer Mehrzahl von Zylindern (9) und mindestens einem gasförmigen-Kraftstoff-Einlassventil für jeden Zylinder (9) der Mehrzahl von Zylindern (9), mit den Schritten:
Durchführen des Verfahrens zum Auswerten der Betriebsfähigkeit von gasförmigen-Kraftstoff Einlassventilen (58) eines Zweikraftstoff-Verbrennungsmotors (100) gemäß einem der vorhergehenden Ansprüche und
Abbrechen (Schritt 320) des Initialisierungsprozesses (300), sobald die Auswertung der Betriebsfähigkeit der gasförmigen-Kraftstoff-Einlassventile (58) basierend auf den Verbrennungsprozessparametern einen Fehler in der Betriebsfähigkeit anzeigt.

10. Verfahren nach Anspruch 9, ferner mit den Schritten:
Spülen (Schritt 314) - zumindest teilweise - eines gasförmigen Kraftstoffversorgungssystems (6) mit dem Spülgas bei einem Druck, der größer ist als der Einlassleitungsluftdruck, zum Beispiel zumindest 0,2 bar, mindestens 0,5 bar oder mindestens 1 bar zum Beispiel im Bereich von 1 bar bis 2 bar oder sogar bis zu 5 bar oder mehr über dem Einlassleitungsluftdruck,
Verschließen (Schritt 316) des gasförmigen Kraftstoffversorgungssystems (6) oder eines Abschnitts desselben und
Auswerten (Schritt 318) der zeitlichen Entwicklung des Spülgasdrucks.

11. Verfahren nnach Anspruch 9 oder Anspruch 10, ferner mit den Schritten:
wenn die Auswertung des Spülgasdrucks eine Fehlfunktion von mindestens einem der gasförmigen-Kraftstoff-Einlassventile (58) angesichts eines zunehmenden Druckabfallverhaltens anzeigt, Aktivieren, zum Beispiel separat oder schrittweise, der gasförmigen-Kraftstoff Einlassventile (58), wodurch Spülgas zu der Ladeluft gegeben wird und möglicherweise Dichtflächen der gasförmigen-Kraftstoff-Einlassventile (58) gesäubert werden, und
Wiederholen der Schritte des Verschließens (Schritt 316) und des Auswertens (Schritt 318) der zeitlichen Entwicklung des Spülgasdrucks.

12. Zweikraftstoff-Verbrennungsmotor (100) mit
einem Flüssigkraftstoffsystem (8),
einem gasförmigen Kraftstoffsystem (6),
einer Mehrzahl von Zylindern (9),
einem gasförmigen-Kraftstoff-Einlassventil (58) für jeden Zylinder (9) der Mehrzahl von Zylindern (9), welches das gasförmige Kraftstoffsystem (6) mit dem Zylinder (9) fluidverbindet,
einem Sensor (77) zum Bestimmen eines Verbrennungsprozessparameters für jeden Zylinder (9) der Mehrzahl von Zylindern (9) und
einer Steuerungseinheit (76), die dazu ausgebildet ist, das Verfahren gemäß einem der vorhergehenden Ansprüche auszuführen.

13. Verbrennungsmotor (100) nach Anspruch 12, ferner mit:
einem Spülgassystem (7) zum Spülen und Füllen des gasförmigen Kraftstoffsystems (6) mit Stickstoff zumindest teilweise, zum Beispiel zumindest oberhalb der gasförmigen-Kraftstoff Einlassventile.

## Revendications

1. Procédé d'évaluation de l'opérabilité de soupapes d'admission de carburant gazeux (58) d'un moteur à combustion interne à deux carburants (100) comprenant une pluralité de cylindres (9) et au moins une soupape d'admission de carburant gazeux pour chaque cylindre (9) de la pluralité de cylindres (9), le procédé comprenant :
le fonctionnement (étape 312) du moteur à combustion interne à deux carburants (100) avec du carburant liquide ;
la fourniture (étape 354) d'azote en tant que gaz de purge aux soupapes d'admission de carburant gazeux (58) à une pression supérieure à une pression d'air de collecteur d'admission en établissant de ce fait une pression différentielle de gaz à travers les soupapes d'admission de carburant gazeux (58) ;
la mesure (étape 360), pour chaque cylindre de la pluralité de cylindres, d'un paramètre de processus de combustion ; et
l'évaluation (étape 362) de l'opérabilité des soupapes d'admission de carburant gazeux (58) sur la base des paramètres de processus de combustion mesurés.

2. Procédé selon la revendication 1, dans lequel l'évaluation (étape 362) de l'opérabilité des soupapes d'admission de carburant gazeux (58) comprend :
la détermination que le paramètre de processus de combustion mesuré pour au moins un cylindre (9) de la pluralité de cylindres (9) est au-delà d'une valeur de seuil ; et
l'identification que la soupape d'admission de carburant gazeux (58) correspondante a un dysfonctionnement.

3. Procédé selon la revendication 2, dans lequel la valeur de seuil est basée sur une valeur moyenne des paramètres de processus de combustion mesurés de l'intégralité ou d'au moins un sous-groupe de cylindres comme toutes les valeurs de cylindres à l'exception de l'au moins un cylindre et/ou la valeur de seuil qui est préréglée ou dépend d'au moins l'un d'un temps d'ouverture des soupapes d'admission de carburant gazeux (58), la charge du moteur à combustion interne DF (100), et des conditions de température.

4. Procédé selon l'une quelconque des revendications précédentes, dans lequel le paramètre de processus de combustion est déterminé sur la base de la pression de cylindre.

5. Procédé selon l'une quelconque des revendications précédentes, dans lequel le paramètre de processus de combustion est une valeur de pression comme une pression moyenne ou une pression de crête et/ou une période temporelle de combustion (Δ) et/ou une valeur d'énergie comme la puissance de cylindre, la pression efficace moyenne indiquée et le taux de dissipation thermique du cylindre respectif.

6. Procédé selon l'une quelconque des revendications précédentes, dans lequel le paramètre de processus de combustion est associé à un cycle de combustion unique ou est dérivé de multiples cycles de combustion.

7. Procédé selon l'une quelconque des revendications précédentes, dans lequel la pression différentielle de gaz à travers la soupape d'admission de carburant gazeux (58) est réglée de sorte qu'une soupape d'admission de carburant gazeux (58) fonctionnant correctement assure une étanchéité appropriée.

8. Procédé selon l'une quelconque des revendications précédentes, dans lequel la pression différentielle de gaz à travers la soupape d'admission de carburant gazeux (58) est au moins 0,2 bar, au moins 0,5 bar ou au moins 1 bar, par exemple dans la plage de 1 à 2 bars ou jusqu'à 5 bars ou plus, au-dessus de la pression d'air de collecteur d'entrée.

9. Procédé de commande d'un processus d'initialisation (300) pour régler les conditions de démarrage pour ajouter un carburant gazeux pour passer à un fonctionnement à carburant gazeux d'un moteur à combustion interne à deux carburants (100) comprenant une pluralité de cylindres (9) et au moins une soupape d'admission de carburant gazeux pour chaque cylindre (9) de la pluralité de cylindres (9), le procédé comprenant :
l'exécution du procédé d'évaluation de l'opérabilité de soupapes d'admission de carburant gazeux (58) d'un moteur à combustion interne à deux carburants (100) selon l'une quelconque des revendications précédentes ; et
l'abandon (étape 320) du processus d'initialisation (300) dès que l'évaluation de l'opérabilité des soupapes d'admission de carburant gazeux (58) sur la base des paramètres de processus de combustion indique une erreur d'opérabilité.

10. Procédé selon la revendication 9, comprenant en outre :
le lavage (étape 314), au moins partiellement, d'un système de carburant gazeux (6) avec le gaz de purge à une pression supérieure à la pression d'air de collecteur d'entrée, par exemple au moins 0,2 bar, au moins 0,5 bar ou au moins 1 bar, par exemple dans la plage de 1 à 2 bars ou jusqu'à 5 bars ou plus, au-dessus de la pression d'air de collecteur d'entrée ;
la fermeture (étape 316) du système de carburant gazeux (6) ou d'une section de celui-ci ; et
l'évaluation (étape 318) du développement temporel de la pression de gaz de purge.

11. Procédé selon la revendication 9 ou 10, comprenant en outre :
lorsque l'évaluation de la pression de gaz de purge indique un dysfonctionnement d'au moins l'une des soupapes d'admission de carburant gazeux (58) compte tenu d'un comportement de baisse de pression accrue, l'activation, par exemple séparément ou par incrément, des soupapes d'admission de carburant gazeux (58), en ajoutant de ce fait du gaz de purge à l'air d'entrée et en nettoyant potentiellement des surfaces d'étanchéité des soupapes d'admission de carburant gazeux (58) ; et
la répétition des étapes de la fermeture (étape 316) et de l'évaluation (étape 318) du développement temporel de la pression de gaz de purge.

12. Moteur à combustion interne à deux carburants (100), comprenant :
un système de carburant liquide (8) ;
un système de carburant gazeux (6) ;
une pluralité de cylindres (9) ;
une soupape d'admission de carburant gazeux (58) pour chaque cylindre (9) de la pluralité de cylindres (9), raccordant de manière fluidique le système de carburant gazeux (6) au cylindre (9) ;
un capteur (77) pour déterminer un paramètre de processus de combustion pour chaque cylindre (9) de la pluralité de cylindres (9) ; et
une unité de commande (76) configurée pour effectuer le procédé selon l'une quelconque des revendications précédentes.

13. Moteur à combustion interne (100) selon la revendication 12, comprenant en outre :
un système de gaz de purge (7) pour laver et remplir le système de carburant gazeux (6) avec de l'azote au moins partiellement, par exemple au moins en amont des soupapes d'admission de carburant gazeux.
